Europäisches Patentamt

European Patent Office

Office européen des brevets

(19)

(11) **EP 1 465 183 A2**

(12) **EUROPEAN PATENT APPLICATION**

(43) Date of publication:
06.10.2004 Bulletin 2004/41

(51) Int Cl.⁷: **G11B 20/00**

(21) Application number: **04002349.1**

(22) Date of filing: **03.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **31.03.2003 JP 2003096301**<br><br>(71) Applicant: **Kabushiki Kaisha Toshiba**<br>**Tokyo (JP)** | (72) Inventors:<br>• **Kojima, Tadashi c/o Toshiba Corporation**<br>  **Minato-ku Tokyo 105-8001 (JP)**<br>• **Taira, Kazuhiko c/o Toshiba Corporation**<br>  **Minato-ku Tokyo 105-8001 (JP)**<br>• **Mimura, Hideki c/o Toshiba Corporation**<br>  **Minato-ku Tokyo 105-8001 (JP)**<br><br>(74) Representative: **Henkel, Feiler & Hänzel**<br>**Möhlstrasse 37**<br>**81675 München (DE)** |

(54) **Information recording medium, information processing method, information processing apparatus, and reproducing apparatus**

(57)     An information recording medium in which recording information including video information is coded at a variable transfer.rate and is recorded as coded information. The coded information is read and decoded in accordance with a decoding process to decoded the video information. A variable transfer rate (Vo) of the coded information is set with respect to a reproducing rate (Vr) in such a manner that an average rate (Voa) of (Vo) for each specific interval is smaller than that the reproducing rate (Vr), and a value of (Vo) larger than that of the reproducing rate (Vr) is permitted for a peak rate (Vop).

\* Interval average rate is not exceeded in any period

FIG. 14

## Description

The present invention relates to an information coding method effective for recording a picture, sound, sub-picture, and the like in recording mediums such as an optical disk, a recording method, a recording medium, a recording apparatus, and a reproducing apparatus. Especially, a field to which the present invention is effectively applied includes a coding method for realizing a high image or sound quality, and a technique for realizing a measure for the high image or sound quality in a seamless reproducing process of multiple scenes.

In recent years, an optical disk and a reproducing apparatus for the disk have been developed in which a picture, sound, sub-picture, and the like are coded and coded data is recorded with a high density. When information such as a movie is recorded on the optical disk, there are a method of fixing a coding transfer rate, and a method of using a variable rate. A fixed rate system is employed as an information recording system into package media which are recording media such as an optical disk. Moreover, attention is focused on an information portion difficult to be coded. When a transfer rate is set for this information portion, many other portions have an excessive quality level. In this system, a maximum time for recording the information in the whole optical disk is shortened.

When the transfer rate is determined basically in order to lengthen a maximum recording time, a quality level of an image of the information portion requiring a large code amount is deteriorated.

On the other hand, for a variable rate system to change a coding amount in accordance with a condition of the image quality, it is possible to lengthen a maximum recording time into the optical disk without sacrificing the image quality.

An information reproducing operation from the optical disk will be described in a case where the variable rate coding system is employed for recording the information into the recording mediums such as the optical disk. In the reproducing operation, in general, the data is read from the disk at the fixed rate. However, the data has been read at the variable rate, and therefore a buffer memory is used to perform a time base collector operation in order to follow the variable-rate data.

That is, the data read from the recording medium is once stored in the buffer memory, and the stored data is sent from the buffer memory in accordance with an instruction of a request for data from a decoding decoder board. Since new data is supplied into the buffer memory substantially at a certain rate, overflow occurs. To solve the problem, the data supply into the buffer memory is stopped immediately before the overflow. In an optical disk system, a read track position is returned by a process called a track kickback. When the data next to the last data region stored again in the buffer memory is read from the optical disk, the data supply into the buffer memory is resumed.

The data is read at the fixed rate in this manner, but a data read amount is adjusted by an intermittent read process, and the data read amount follows a variable rate data process in the decoder board.

In this case, a relation between a data read rate (Vr) from the recording medium and a user data rate (variable transfer rate) (Vo) is set to "Vr > Vo". In DVD standards, an average rate in the whole disk is set to about 5 Mbps, and the maximum rate is set to 10.08 Mbps.

When the maximum user variable transfer rate Vo is 10.08 Mbps, it is indicated that continuous reproducing is impossible, unless the read data is continuously supplied to the decoder at a data rate of 10.08 Mbps in a certain region in a system operation of the reproducing apparatus.

The conversion process into the variable rate from the fixed rate of the data, performed in the buffer memory, has briefly been described. Here, when the track kickback is performed immediately before the overflow of the memory, the data is not supplied into the memory before reaching the read position of the data next to the last data stored in the memory. For this, a data accumulation process into the buffer memory is required. In order to obtain the accumulated data, the maximum user data rate (Vo) needs to be set to be smaller than the data read rate (Vr). A secured read rate in DVD-ROM standards is Vr = 11.08 Mbps.

Moreover, when the information such as the movies is recorded in the optical disk, story data of a plurality of stories that simultaneously proceed is sometimes recorded. That is, the data relates to a multi-story including a plurality of different stories optionally selectable halfway in a certain story, and the story returns to one original story again to constitute the whole story. Furthermore, there is a video process called a multi-angle. That is, the stories are constituted in such a manner that a specific portion is photographed from different directions by a plurality of cameras, all data is recorded in the recording medium, and a final user who views reproduced video can select favorable angled video of the camera. In order to secure continuous reproduction in this multi-scene process in a seamless manner without cutting the movie into pieces, (1) the data read rate from the recording medium, (2) the user data rate, and (3) restrictions for recording the data of each branch scene of the multi-scene in time-division multiplex. New video processes such as this multi-scene process are realized. As patents concerning the multi-scene process, Jpn. Pat. Nos. 2857119, 2857128, 2857129, and 2857130 previously applied for by the present inventor are registered. For DVD-video in the DVD standards using this technique, a new video process has been presented to many users, and has acquired a favorable reputation. However, in this multi-scene region, the user data rate is strictly limited as compared with a usual region. The user data rate has further been limited to be small.

Here, if it is possible to raise the user data rate (variable transfer rate) (Vo), it is possible to remarkably enhance an image quality. However, since a process of connecting scattered/arranged cell data is necessary in the multi-scene process, a jump process is performed between cells arranged in the time-division multiplex. Therefore, a period when the data cannot be read is generated. In this case, especially in addition to the data read rate (Vr) from the recording medium, the restrictions need to be devised not to cause data shortage/collapse at a jump time, and the variable transfer rate (Vo) is further limited.

On the other hand, however, when the images such as the movie are coded, there is a region where the coding amount largely increases only in a short time. In this case, the coding amount is decreased (reduced) to handle the problem in a rounding process of the data. As a result, the video quality is sometimes degraded. Especially, the DVD has spread and it has become possible to enjoy a high-quality movie at home. Furthermore, a display for a high-definition (HD) image has started to spread at home, and the information recording medium has also been started to be reviewed for handing HD-video. Under this situation, there has been a strong demand for a large increase of the user data rate in order to enhance the image quality.

To solve the problem, according to one aspect of the present invention, a basic object is to provide a variable transfer rate coding process method in which a variable transfer rate (Vo) is allowed to largely increase while a data read rate (reproducing rate) (Vr) from a recording medium is limited.

According to another aspect of the present invention, there are also provided a coded information processing method, a recording apparatus, a reproducing apparatus, a recording method, a reproducing method, and an information recording medium. It is another object of the present invention to provide a handling method in an increase of the user data rate in a multi-scene region together with an increase of the user data rate (Vo) in usual continuous data recording.

In one aspect of the present invention, there is provided a basic system in which collapse is not caused by data shortage to reproduce a recording medium recording usual continuous data. For limitation of the user data rate (Vo) suppressed so as to be not more than the data read rate (Vr) from the recording medium, a peak data rate (Vop) which is not less than (Vr) is usable in a specific condition. That is, recording information including video information is coded at a variable transfer rate, and recorded as coded information in the information recording medium. When the coded information is read, the read coded information is decoded in accordance with a decoding process, and the video information is decoded. At least the variable transfer rate (Vo) of the coded information is set with respect to a reproducing rate (Vr) at the read time in such a manner that an average rate (Voa) for each specific interval is smaller than the reproducing rate (Vr), and the peak data rate (Vop) is allowed to be larger than the reproducing rate (Vr). Therefore, at the recording or reproducing time, the rate (Vo) larger than the reproducing rate (Vr) sometimes exists in transfer data.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a constitution diagram of a compression process apparatus of an image signal;
FIGS. 2A and 2B are explanatory views showing a condition of conversion of coding amount (transfer rate);
FIG. 3 is a diagram showing a constitution example of a recording medium reproducing apparatus;
FIG. 4 is an explanatory view showing a volume space of DVD;
FIG. 5 is a diagram showing details of a video manager and video title set of FIG. 4;
FIG. 6 is a diagram showing a relation between the video title set and a cell of FIG. 5;
FIG. 7 is an explanatory view showing a relation between a program chain and the cell;
FIG. 8 is an explanatory view of a video pack in a video object unit;
FIG. 9 is a diagram showing an example of a flow of data of a multi-scene;
FIG. 10 is a diagram showing an arrangement example of an interleaved block;
FIG. 11 is an explanatory view showing a relation between a data buffer and data in a reproducing process of a DVD recording medium;
FIG. 12 is an explanatory view showing a relation between the data buffer and data in a multi-scene process of DVD;
FIG. 13 is an explanatory view showing a relation between a user data rate and read data in the multi-scene process of the DVD;
FIG. 14 is an explanatory view of an example of a signal processing system of a major part of the present invention, and is also an explanatory view showing a relation between a data rate including the user data rate and an elapsed time;
FIG. 15 is a signal processing block diagram showing a signal processing method and apparatus according to the present invention;
FIG. 16 is a diagram showing a constitution example of a recording medium reproducing apparatus to which the present invention is applied;
FIG. 17 is an explanatory view showing one example of the relation between the data buffer and data in the reproducing process of the apparatus to which the present invention is applied;
FIG. 18 is an explanatory view showing another example of the relation between the data buffer and data in the reproducing process of the apparatus to which the present invention is applied;

FIG. 19 is a diagram showing an example of a basic model of the reproducing apparatus to which the present invention is applied; and

FIG. 20 is an explanatory view showing another example of the signal processing system according to the present invention, and is also an explanatory view showing the relation between the reproducing rate or the data rate including the user data rate and the elapsed time.

An embodiment of the present invention will hereinafter be described with reference to the drawings.

In the present invention, a relation between a data read rate (reproducing rate) (Vr) from a recording medium and a user data rate (Vo) is especially important. Therefore, a technique constituting an assumption of the present invention will be described.

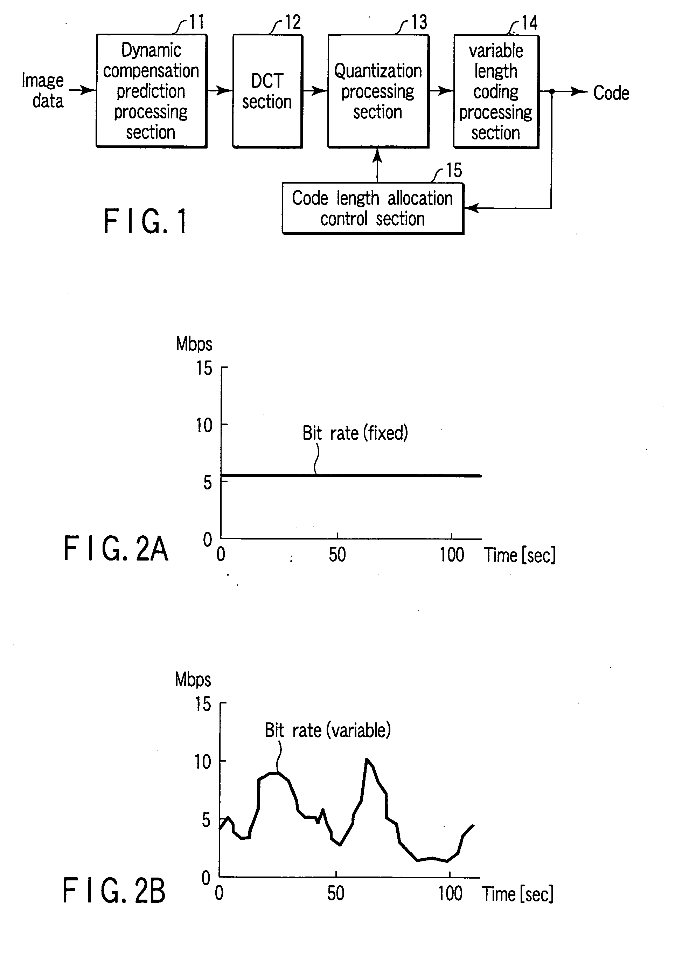

FIG. 1 is a schematic constitution diagram of a block which performs a compression process of an image signal. For the image signal, a movement vector of a coding object section is estimated by a movement compensation prediction process. Prediction between frames, in which a movement amount is compensated for, is performed in a dynamic compensation prediction processing section 11. Next, predicted data is subjected to a two-dimensional discrete cosine transform (DCT) process in a DCT section 12. In this process, a degree of redundancy is compressed. To transmit the compressed data via a digital circuit, these values need to be approximated at a discrete level, and a quantization processing section 13 executes a quantization process. In the quantization processing section, a binary coding process is also carried out so as to facilitate the transmitting/recording. Further to remove redundancy caused by continuity of a binary code, a variable length coding processing section 14 performs a variable length coding process, and outputs an image code to an output section.

In "variable rate coding", a coded signal subjected to "variable length coding" is fed back to a code length allocation control section 15, and a quantization coefficient (quantization table) is controlled from a viewpoint of limitation of a total code amount. A control is executed in such a manner that a large coding amount is allocated to a portion difficult to be coded and the coding amount is limited to be small in a region easy to be coded. In actuality, a method of using the portion difficult to be coded as a standard beforehand to perform the quantization by a method called 2 path/3 path is used. Further in the method, a coding process is performed in advance in which an excess portion is present, and the quantization is optimized/controlled based on situation data at this time again.

Changes of a fixed rate and variable rate in this image compression coding process are shown in FIGS. 2A and 2B. The abscissa indicates time, and the ordinate indicates a bit rate. In the coding process of both systems in the figures, a total data amount is the same, but the coding amount is controlled in accordance with the situation of the coding in the image in the variable rate system, and it is therefore possible to enhance an image quality.

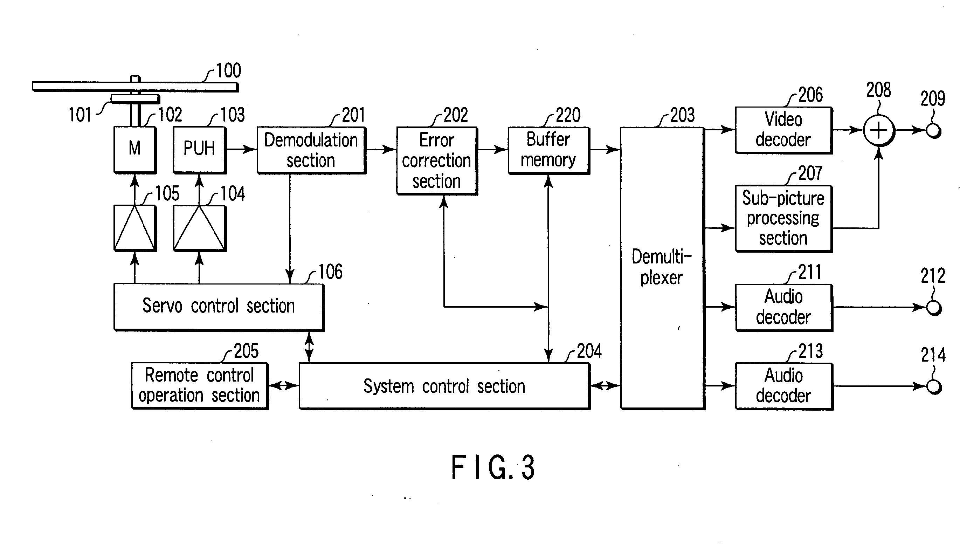

FIG. 3 shows a constitution example of a reproducing apparatus to play back an information recording medium (optical disk) in accordance with an example of an optical disk drive. A disk 100 is laid on a turntable 101, and rotated/driven by a motor 102. A reproducing mode is now assumed. Then, the information recorded in the disk 100 is read by a pickup section (PUH) 103. The pickup section 103 is moved/controlled and tracking-controlled by a pickup drive 104. An output of the pickup section 103 is inputted and demodulated in a demodulation section 201. The demodulated data is inputted into an error correction section 202, errors are corrected, and the data is inputted into a demultiplexer 203. The demultiplexer 203 separately derives video information, subtitle and character information, sound information, control information, and the like. That is, the subtitle and character information (sub-picture), sound information, and the like are stored in accordance with the video information in the disk 100. In this case, various languages can be selected as the subtitle and character information and the sound information.. The selection is realized by the control of a system control section 204. An operation input with respect to the system control section 204 is given through an operation input section (remote control operation section) 205 operated by a user. The video information separated by the demultiplexer 203 is inputted into a video decoder 206, and is subjected to a decode process in accordance with a system of a display device. For example, the information is converted/processed, for example, into NTSC, PAL, SECAM, wide screen, and the like. A sub-picture separated by the demultiplexer 203 is inputted into a sub-picture processing section 207, and decoded as subtitle or character video. A video signal decoded by the video decoder 206 is inputted into an adder 208, and is added here to the subtitle and character video (= sub-picture). This added output is derived at an output terminal 209. The sound information selected and separated by the demultiplexer 203 is inputted and demodulated in an audio decoder 211, and is derived via an output terminal 212. In addition to the audio decoder 211, an audio decoder 213 is disposed, so that sound of another language can be reproduced and outputted via an output terminal 214.

Here, a buffer memory 220 is disposed after the error correction section 202, and reproduction data is once stored in the buffer memory 220, and is supplied to the demultiplexer 203 in accordance with a decode speed. When a data amount of the buffer memory 220 overflows in usual continuous reproduction, the system control section 204 controls a serve control section 106 so as to execute a track kickback process. In the kickback process, data now read for predetermined sectors is again read. Even when the data overflows in the buffer memory 220, a function of compensating for a lack of data is provided. In an actual operation, a sector number finally brought in the buffer memory is stored immediately before the data of the buffer memory 220 overflows. Next, a read position is kicked back, the data of the previously read portion is not inputted into the buffer memory 220, and a read operation is continued. Moreover, the data to be stored is inputted again into the buffer memory 220 from the data with a sector number next to that last inputted into the buffer memory 220.

That is, the data input with respect to the buffer memory 220 is stopped before the data input is restarted after the kickback. During the stop, the data required by the demultiplexer 203 is outputted from the buffer memory 220. Therefore, the amount of stored data decreases, and new data input is possible again. This operation is repeated. Therefore, even when the data read at the fixed rate is sent to each decoder processing section through the demultiplexer 203 at the variable rate, a data input/output relation is established.

When the data is read out at one-fold speed in a system model in DVD-video standards, a capacity of about 4 Mbit is designated by the buffer memory 220 in order to demodulate the sound/image without any collapse. In recent years, a memory having 15 or more times the capacity has inexpensively been obtainable with a progress of a semiconductor technique. Therefore, when a large capacity is usable in the buffer memory 220, it is possible to introduce regulations other than user data rate limitation, such as the DVD standards. The capacity of the buffer memory 220 is further important for a multi-scene process. The capacity of 4 Mbit is designated for a purpose of securing a seamless operation of the multi-scene. Details of the present invention, data structure and important multi-scene process will hereinafter be described.

When the optical disk including multi-story is played back, choices of the multi-story obtainable from disk management information are displayed as a menu, for example, on a monitor screen or a sub-display section of the system. The user can select branch stories beforehand by a remote control operation via the remote control operation section 205 while watching the menu. Here, the system control section 204 grasps identification information of the branch story when given selection information. The system control section 204 extracts data including the same identification information as the grasped identification information in a header from the buffer memory 220, and transmits the data to the demultiplexer 203. Accordingly, the branch story selected by the user can be reproduced.

Here, the recording of the information related to the present invention in the optical disk, mainly the multi-scene process, will be described.

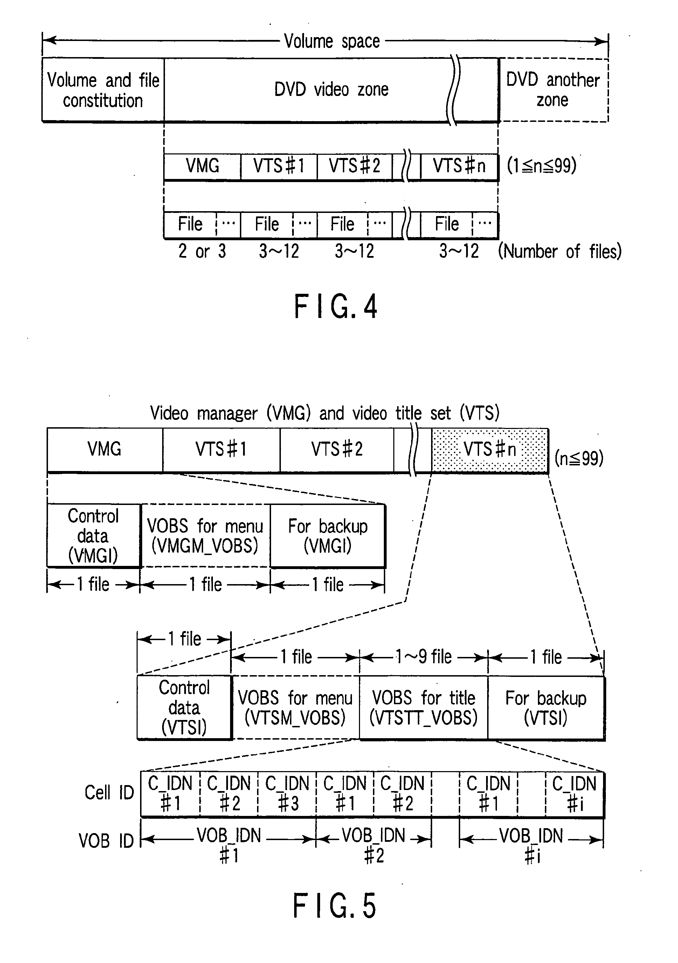

FIG. 4' shows a volume space of the optical disk 100. As shown in FIG. 4, the volume space is constituted of a volume and file constitution zone, DVD video zone, and another zone. In the volume and file constitution zone, a universal disc format specification revision 1.02 (UDF) bridge constitution is described, and the data can be read from the zone with a computer having predetermined standards. The DVD video zone includes a video manager (VMG), and video title set (VTS). Each of the video manager (VMG) and video title set (VTS) is constituted of a plurality of files. The video manager (VMG) is information for controlling the video title set (VTS).

FIG. 5 shows the structure of the video manager (VMG) and video title set (VTS) in more detail. The video title set (VTS) includes: video title set information (VTSI) which is control data; a video object set (VTSM_VOBS) which is data for displaying the menu; and a video object set (VTSTT_VOBS) for the title of the video title set which is the video object set for video display. The set also includes video title set information (VTSI) for backup which has the same content as that of the video title set information (VTSI) which is the control'data.

Furthermore, a video object set (VTSTT_VOBS) which is the video object set for the video display is constituted of a plurality of cells (Cell). A cell ID number (C_IDN) is assigned to each cell (Cell).

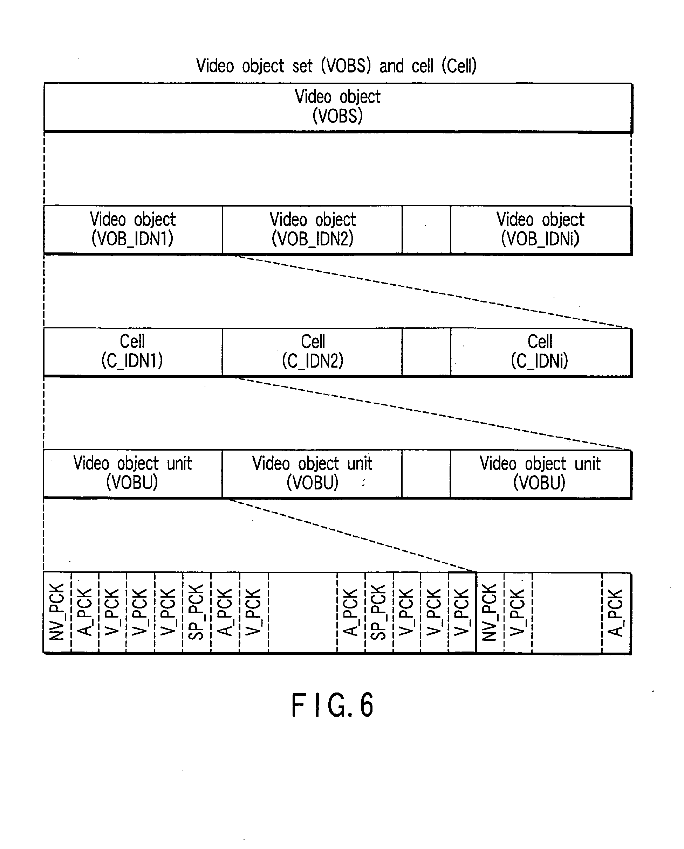

FIG. 6 shows a relation between the video object set (VOBS) and the cell (Cell) and further hierarchically shows the content of the cell (Cell). When a playback process of the DVD is carried out, concerning a break process of video (scene change, angle change, story change, and the like) and special reproduction, the video is handled by a cell (Cell) unit or a video object unit (VOBU) unit in a lower layer of the cell unit or an interleaved unit (ILVU) unit described later. Here, the video object unit (VOBU) is constituted of various packs, but among the packs, a navigation pack (NV_PCK) is used mainly as control data for controlling the reproduction and display of the data in video object unit to which the pack belongs and as the control data for searching the data of the video object unit.

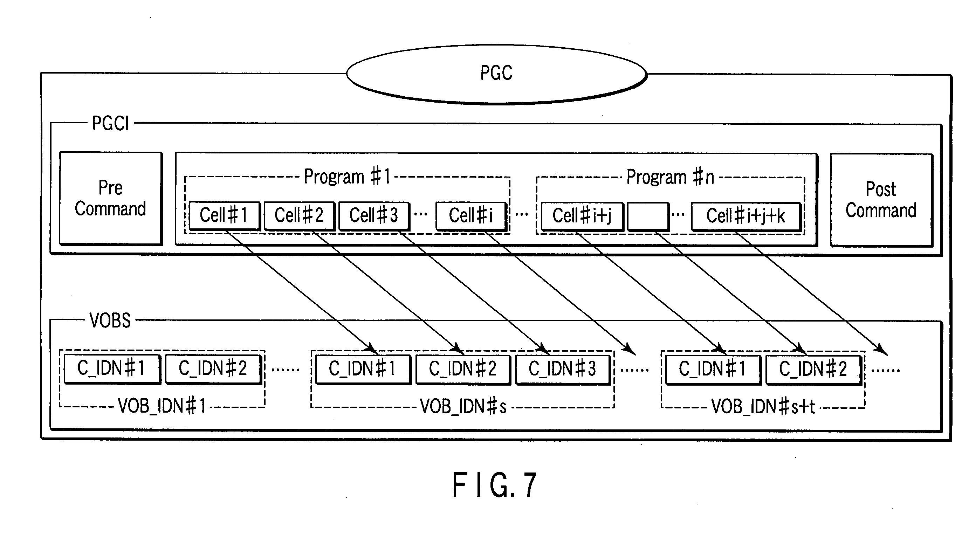

FIG. 7 shows an example in which the reproduction order of the cells (Cells) is controlled by a program chain (PGC). As the program chain (PGC), a program chain (PGC#1, PGC#2, ...) is prepared so that reproduction order of the data cells can variously be set. FIG. 7 shows an example in which a program #n is executed with certain program chain information (PGCI).

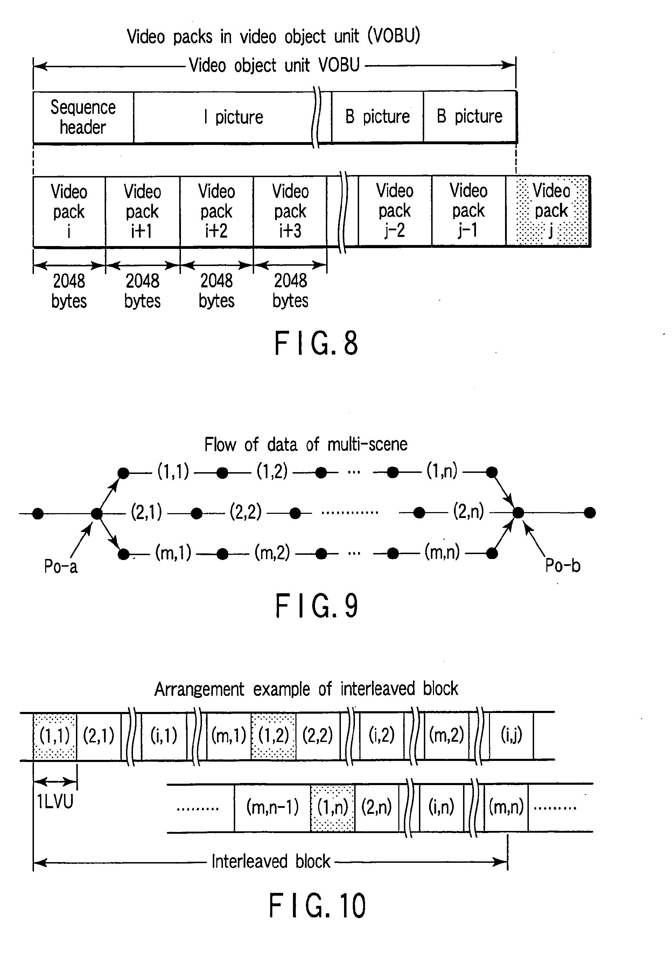

FIG. 8 shows a relation between the video object unit (VOBU) and the video packs in this unit. The video data in VOBU is constituted of one or more groups of pictures (GOP). The encoded video data conforms, for example, to ISO/IEC13818-2. The GOP of VOBU is constituted of I/B pictures, and continuous data is divided into the video packs.

FIG. 9 shows an example of the multi-scene process, in which there are three branch stories and the story is equally divided into n so that each code amount of first, second, and third branch stories has an equal code amount. In a demodulation process, demodulation of a certain story is executed, and the process shifts to a demodulation process of the branch story selected/designated in advance at a point (Po-a). For example, when the second branch story is selected, the demodulation of cell (2, 1) → cell (2, 2) ... cell (2, n) is executed, and the demodulation of a main story is executed again at a point (Po-b). This data constitution of the multi-story is also similar in a multi-angle. Each of a plurality of video objects (VOB) different from one another in angle is divided into a plurality of interleaved units (ILVU). A block obtained by time division of each branch story of the multi-story has been described above as the cell, and a divided block in the multi-scene will hereinafter be referred to as the interleaved unit (ILVU).

FIG. 10 shows an arrangement example of the interleaved block. In this example, each of 1 to m video objects (VOB) is divided into n interleaved units (ILVU) and arranged. In this manner, in an arrangement portion of the interleaved unit of the recording medium, a first unit of each VOB is disposed in order, next a second (2nd) unit is disposed in order, and finally an n-th unit is disposed in order.

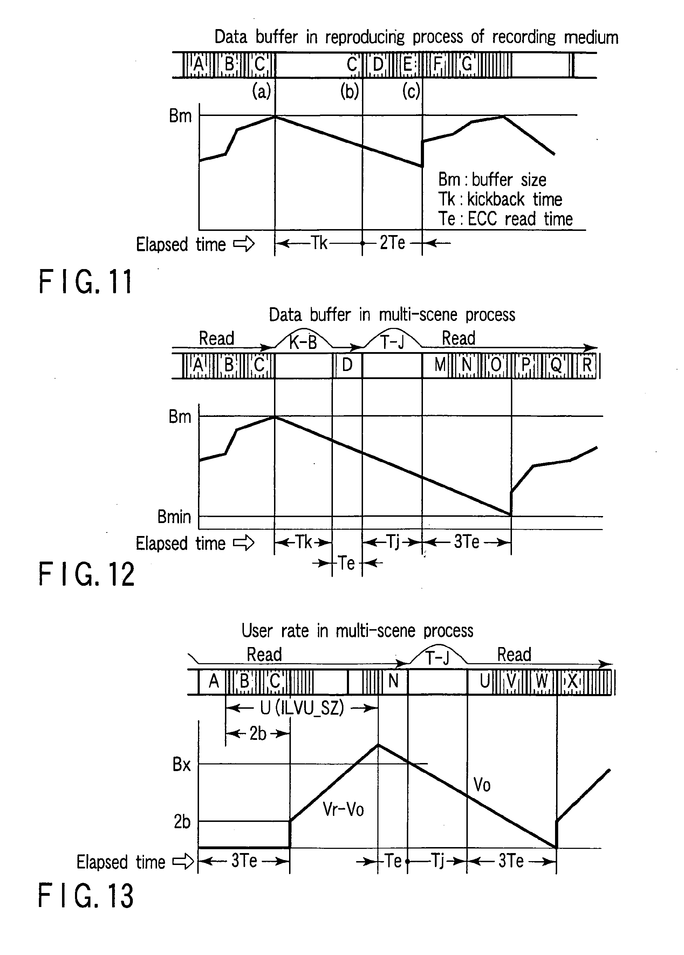

FIG. 11 shows transitions of the data supplied to the buffer memory 220 from the error correction section 202 in the reproducing apparatus of FIG. 3, and buffer data at a time when each decoder block requires the data with respect to the buffer memory 220 through the demultiplexer 203 with an elapse of time. The data read through the PUH 103 is subjected to an error correction process by the error correction section 202, and the data subjected to the error correction process is supplied to the buffer memory 220. In this case, a supply rate is the read rate (Vr) from the recording medium. On the other hand, in response to a request from each decoder section, the demultiplexer 203 reads the data from the buffer memory 220 at the user data rate (Vo). When a variable rate coding system is used as a data compression system, (Vo) fluctuates. The DVD standards permit the data to be used at a maximum rate of 10.08 Mbps, and a reproducing operation needs to be secured at Vo = maximum user data rate.

By this operation, in the buffer memory 220, data corresponding to a difference between (Vr) and (Vo) is replenished as accumulated data in the buffer memory 220. As a result, the buffer memory 220 tends to overflow. The system control section 204 stops the data input into the memory immediately before the overflow, and stores a sector ID number of the last input data. Next, the system control section 204 performs a kickback operation to move the read position of the PUH 103 to the previous track. The read operation of the data is carried out with respect to the track by the kickback operation. When the sector data next to the sector ID number of the data inputted into the buffer memory 220 before the kickback operation is detected by a data read operation, the data is stored again into the buffer memory 220 continuously to the previous data. In this case, the data input into the buffer memory 220 is stopped during the kickback operation. Since each decoder section requires the data in this period, the stored data in the buffer memory 220 continues to decrease.

FIG. 11 shows an ECC block in the buffer memory (upper part) and the transition of the data amount in the buffer memory (lower part). Moreover, here, when an ECC block C constituted of a plurality of sectors is subjected to the error correction process and supplied to the buffer memory, the buffer memory nearly overflows, and the kickback is executed. The figure shows this condition. When an ECC block D is again detected after the kickback, the data subjected to the error correction process is stored in the buffer memory 220 from the ECC block D. A period in which the buffer memory continuously decreases in FIG. 11 is kickback Tk+2Te. However, the buffer memory 220 continues to decrease from when a top sector ID number of the ECC block D is detected until all the ECC block D is read to complete the error correction process. Here, it is described that a period for reading one ECC block is necessary as an error correction process period.

FIG. 12 is a diagram showing a relation between the buffer memory and data in a severest situation of a use condition of the data buffer in the multi-scene process in the existing DVD-video. The upper part shows the ECC blocks in the buffer memory and the lower part shows the transition of the data amount in the buffer memory. When the buffer memory 220 nearly overflows due to the data of the ECC block C, the kickback process is carried out as shown in FIG. 11. Additionally, a data connection portion is the first sector of the ECC block D, and second and subsequent sectors of the ECC block D are assumed to constitute the data of a separate interleaved unit. Then, after completion of read of the ECC block D, next a track jump is carried out to the position of the interleaved unit for the connection.

Here, when the interleaved unit of a connection end is constituted of the last sector of an ECC block M, the data needs to be read from the first sector of the ECC block M for the error correction process. A timing at which the error correction process of the ECC block N next to the ECC block M is completed is a read completion time of an ECC block O. Therefore, supposing that the ECC blocks D and N use only one sector, the stored data of the buffer memory 220 continues to decrease at the maximum user data rate (Vo) in a period of (kickback Tk + ECC block D read time Te + track jump time Tj + 3Te) during the handling of substantially first memory overflow. That is, the buffer memory 220 requires a data storage capacity of $(Tk+Tj+4Te) \times Vo$ or more.

A concrete value in the DVD-video is as follows. When a situation shown in FIG. 12 occurs in the outer periphery of the disk at the time of reproduction at one-fold speed, it is assumed that Tk = 104 msec, Te = 24 msec, Tj = 200 msec. Then, the data of the buffer memory 220 continues to decrease at the maximum user data rate = 10.08 Mbps all for 399 msec. Therefore, Bm = 3.41 Mbit or more is required. Additionally, in the actual DVD standards, the maximum Vo is 10.08 Mbps in a usual continuous data arrangement region, but a Tj time differs with an outer/inner periphery in the multi-scene region. Especially, when the interleaved unit is large, the Tj time increases. Therefore, a maximum Vo value is set to 8 Mbps.

FIG. 13 shows the ECC blocks in the buffer memory in a case where the scene is changed at the multi-angle in the upper part and shows the transition of the data amount in the buffer memory in the lower part. After data reproduction is completed before changing the scene, the scene shifts to a new scene. Since the data on the buffer memory with respect to the new scene is considered to start once from "0", the situation of the buffer memory including severest use conditions is assumed and shown.

The interleaved unit of new scene change is constituted of the last sector of the ECC block A, and the last data of the interleaved unit is the first sector of the ECC block N. After reading the ECC block N, the track is assumed to jump to a first ECC block U of the interleaved unit of the next connection end. When the next interleaved unit is constituted of the last sector of the ECC block U, the stored data of the buffer memory is eventually consumed at the user data rate (Vo) in a period (Tj+4Te).

Therefore, an interleaved unit size (ILVU_SZ: U) needs to be set to be not less than the following value. Assuming ECC block capacity = b, Te = b/Vr, then

$$2b+((U-2b)/Vr) \times (Vr-Vo) \geq Vo(Tj+(4b/Vr);$$

and

$$U \geq (Tj \times Vr+2b)(Vo/(Vr-Vo)).$$

When the Tj time is long, the interleaved unit requires a large unit size. When the user data rate (Vo) is large, the large interleaved unit size is similarly required. A track jump time is related to a track jump distance and read position (inner or outer periphery) on the disk.

Since the distance is related to the interleaved unit size and the number of branch scenes, design conditions are determined from the whole interrelation. From this, in the DVD-video standards, the maximum user data rate is set to 10.08 Mbps in a usual region, but is limited to 8 Mbps only in the interleaved unit portion.

Here, when it is possible to raise the user data rate (Vo), it is possible to remarkably enhance the image quality. Especially at home, the display for the high-definition (HD) image starts to spread, and the information recording medium also needs to be adapted to the HD-video. There has been a strong demand of a large increase of the user data rate for the enhancement of the image quality.

Moreover, a handling method is demanded in the increase of the user data rate in a multi-scene region together with the increase of the user data rate (Vo) in the usual continuous data recording.

In the present invention, to play back the recording medium in which the usual continuous data is recorded, there are provided a system in which the user data rate (Vo) is suppressed/limited to be not more than the data read rate (Vr) from the recording medium, but is allowed to be usable up to the peak data rate (Vop) not less than (Vr), a coding method, and a recording/reproducing apparatus.

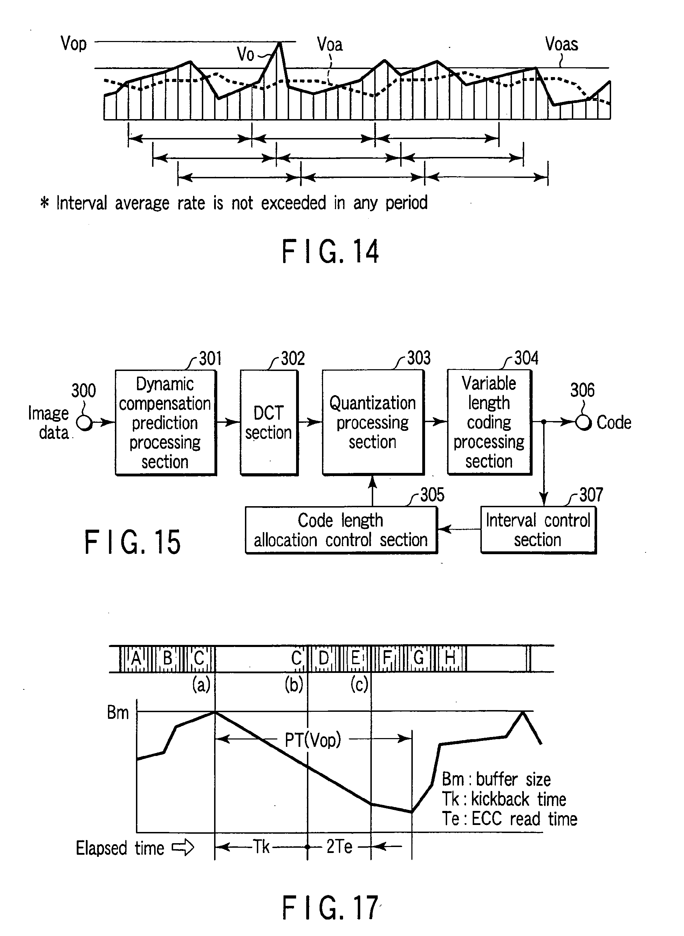

The embodiment of the present invention will hereinafter concretely be described. FIG. 14 is a diagram showing a relation between an elapsed time and data rate in the coding processing system of the image/sound of the present invention. The coded data rate (Vo) is limited in such a manner that (1) the average rate (Voa) in a present interval time is prevented from exceeding a preset value (Voas) and that (2) a momentary user data rate is prevented from exceeding a preset peak rate (Vop). In this case, for the recording mediums such as an optical disk, the average rate of the whole disk has a value obtained from a recording time of an information signal of an image and sound, and the value is, for example, about 4.5 Mbps in the DVD-video standards. However, for the average rate (Voas) in the preset interval time, the maximum user data rate is usable in the DVD-video standards.

Moreover, it is possible to set the peak rate (Vop) preset in the present invention to a value larger than the read rate (Vr) from the recording medium, and the recording/reproducing of the high-quality image is possible. It has been described that the peak rate (Vop) is used in a moment, but when the buffer memory 220 is sufficiently enlarged as described above, side effects are not produced even with continuous occurrence of the peak rate for three to five seconds depending on the setting of the interval time.

As shown in FIG. 14, the average rate (Voa) in a set period does not exceed the set average rate (Voas) in any period. Therefore, when (Voa) is not more than the maximum rate (Vo) smaller than the data read rate (Vr) from the recording medium, as described with reference to FIGS. 11 to 13, decoder continuous reproduction is secured in the reproduction process.

FIG. 15 is a compression process constitution diagram of the image signal of the present invention. In the variable rate coding process described with reference to FIG. 1, at least two path processes are actually carried out. The average rate is limited in the interval time (set time period) at a time when the final code amount is set. A dynamic compensation prediction processing section 301, DCT section 302, quantization processing section 303, variable length coding processing section 304, and code length allocation control section 305 correspond to the dynamic compensation prediction processing section 11, DCT section 12, quantization processing section 13, variable length coding processing section 14, and code length allocation control section 15 described with reference to FIG. 1, respectively.

The average code amount (average rate) in the interval time is limited to the set value, but the information includes video/sound/character information and may be limited by a total code amount. An interval control section 307 monitors an average code amount.

The object and effect of the present invention are fulfilled especially with respect to the image signal having a large code amount fluctuation.

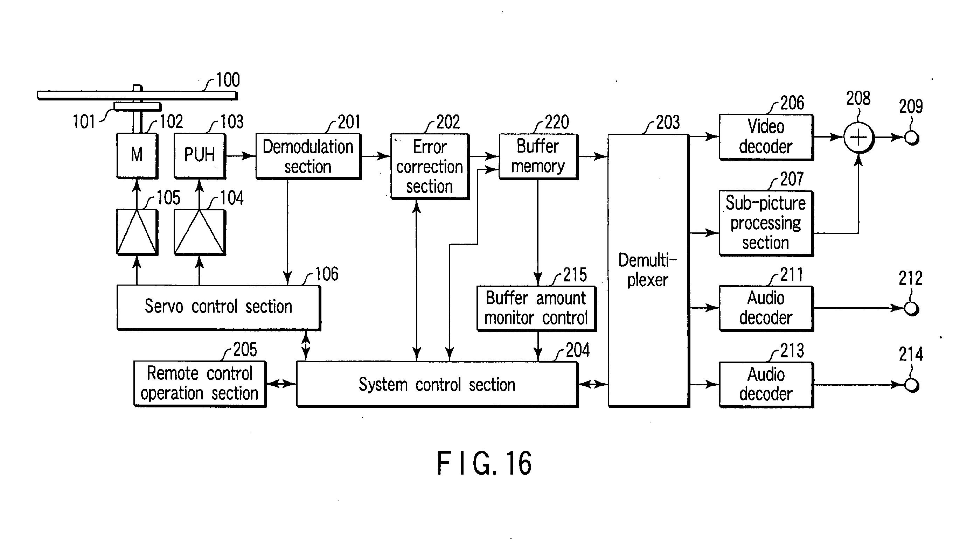

FIG. 16 is a diagram showing an example of a reproducing apparatus which plays back the recording medium in the present invention. Since each operation is similar to that shown in FIG. 3, the description is omitted. A different respect lies in that a data residual capacity of the buffer memory 220 needs to be monitored in a partial process in the reproduction process and a function for this (buffer amount monitor control section 215) is added. The operation will be described using the following data amount transition diagram.

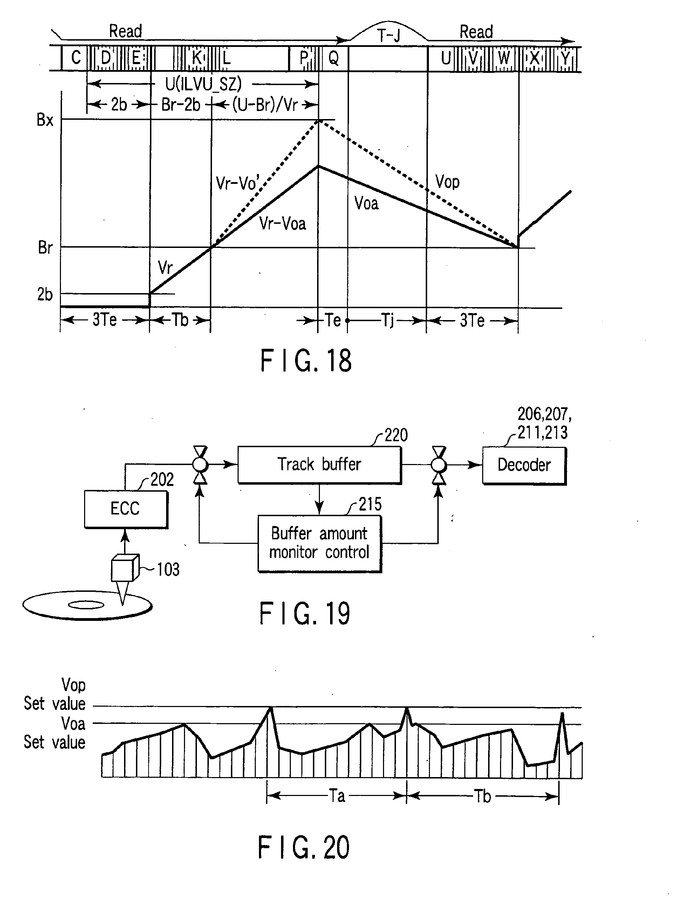

FIG. 17 is diagram showing a data relation between the data in the buffer memory and the data amount in a case where a coding rate limiting function of the present invention is added to the operation process described with reference to FIG. 11. In the same manner as in the processing process of FIG. 11, when the ECC block C is inputted into the buffer memory 220 immediately before the overflow, the kickback is carried out at this time. When there is a request for the data from the decoder section through the demultiplexer 203 at the peak rate (Vop) higher than the disk read rate (Vr) during the kickback, the buffer data is decreased (reduced) more rapidly as compared with the decrease (reduction) shown in FIG. 11.

When the ECC block C of the previous data read position is detected again after the kickback, the data is read by the error correction section 202 from the first sector of the next ECC block D and subjected to the error correction process. The subsequent data is similarly read and subjected to the error correction process. However, when the peak rate (Vop) of the data processing of the decoder section continues, the data is largely decreased (reduced) by a difference between the output rate (Vr) of the error correction section 202 and (Vop).

Here, assuming that the interval time is (Ti), a buffer capacity Bm is:

$$Bm \geq (Ti\text{-}Tk\text{-}2Te) \times (Vop\text{-}Vr) + Vop \times (Tk\text{+}2Te)$$

Then, it is possible to secure the operation including a margin.

FIG. 18 shows another example of the condition of the change of the buffer data amount in the operation of the reproducing apparatus of the recording medium to which the present invention is applied. A buffer data amount transition of the recording medium in the present invention is shown with respect to FIG. 13 showing the secured operation in the existing DVD-video standards. That is, continuous operation security after the scene change is shown in the reproducing operation of a multi-angle portion in a case where the scene is changed. At the time of the track jump to the first ECC block C of the interleaved unit (ILVU) of another branch scene from that of a certain branch scene, video continuity newly starts here because the scene is changed. Here, it is important to secure the seamless operation thereafter. When the new unit (ILVU) is constituted of the last sector of the ECC block C, the sector is a start sector of ILVU. The ECC blocks are successively read out, subjected to the error correction process, and stored in the buffer memory 220. Here, when the data of the ECC block K is stored in the buffer memory 220, and the buffer amount reaches Br, the data starts to be supplied to the decoder section through the demultiplexer 203. In this manner, when the scene is changed as shown in FIG. 12, and the data in the new interleaved unit is read, the data is allowed to be outputted at the time of the error correction process in the above-described example, but in this example it is important to start the data output at the time of storage of the buffer amount by Br.

Subsequently, each ECC block is subjected to the error correction process. It is here assumed that a time for consuming the data in each interleaved unit size (ILVU_SZ) in each decoder is longer than the interval time (Ti) which is an average rate (Voa) limiting condition. Then, concerning the data processing when and after securing the buffer amount Br in the interleaved unit in FIG. 18, even when a peak rate (Vop) region exists, the data processing may also be considered to be performed at the average rate (Voa). Even when the peak rate (Vop) exists in the interval time, a time for processing the data of the interleaved unit in the decoder is not less than the interval time. Therefore, the buffer amount increases in {(Vr-Voa)×read time of interleaved unit} in the unit.

When reading an ECC block Q that is the last data of the interleaved unit, the track jump is started. The track is jumped to the ECC block U that is the first ECC block of the next continuing interleaved unit, and the read of the ECC block U is started. For the data consumption in the track jump period, even when the data is consumed at the peak rate, the data may also be considered to be consumed at the average rate (Voa) in verifying the system.

To consume the data at (Vop) in the track jump period, the data consumption at a time when the data is read from the previous interleaved unit at rate (Vop-Voa) is Voa-(Vop-Voa) = 2Voa-Vop. A decrease (reduction) data amount larger than Voa during the track jump is compensated for by the data stored in the buffer memory in advance. Here, the data is read from the new interleaved unit after the track jump and subjected to the error correction process. When new data starts to be supplied into the buffer memory, a remaining data amount of the buffer memory at this time must be Br (additionally, in an environment where data input/output conditions with respect to the buffer memory is severest). Supposing that the data is decreased (reduced) when Br is maximum at (Vop-Voa), a time required until the amount of stored data turns to "0" is a time for which the seamless reproduction can be assured. Here, first even with the presence of the decrease (reduction) region at the peak rate in the interval time from when an ECC block X starts to be read, it is considered that the data is consumed at the average rate (Voa) lower than the rate (Vr) on average. Therefore, the amount of the data stored in the buffer memory 220 increases. In this case, considering a worst value of Br, about 90% of the data is consumed at the peak rate (Vop) in the interval time of the specific region, and the remaining 10% indicates limitless "0" consumption. In this coding style, Br = (Vop-Voa)×(Ti) is set. Then, even with the presence of any coding style, the seamless reproduction can be assured.

Therefore, the interleaved unit size U (ILVU_SZ) is as follows.

$$Br+((U-Br)/Vr)\times(Vr-Voa)\geq$$

$$Voa\times Tj+(Voa\times 4b/Vr)+Br.$$

Further, the following is obtained:

$$U \geq (Tj\times Vr+4b)\times(Voa/(Vr-Voa))+(Vop-Voa)\times Ti$$

It can be proved that the size of the interleaved unit may be set to be larger than the value indicated by the existing DVD-video standards by Br.

FIG. 19 shows an example of a system model in the reproducing process of the present invention. The buffer amount monitor control section 215 of the track buffer (buffer memory) 220 is simply added with respect to the system model shown by the DVD standards. Especially, a decode start timing process of a new scene after the scene change at the time of the scene change operation in the multi-scene process shown in FIG. 18 requires the monitoring of the buffer amount.

In the basic technique of the present invention, when the information such as the video/sound/character information is coded at the variable rate, the pre-designated average rate (Voas) limitation is determined in the preset interval time, and the pre-designated peak rate (Vop) is permitted in the actual code amount. Especially, when the peak rate (Vop) is allowed to be larger than the data read rate (Vr) in the reproducing process of the recording medium, high-quality video coding is realized.

In a modified example, a preset code rate (VOb) is used as a usual maximum coding rate. When one or two processing units GOP are momentarily continued, for example, in the compression of MPEG system, the code amount indicating the peak rate (Vop) is permitted, but the occurrence period is limited so as to be not less than a pre-designated time interval.

FIG. 20 shows the relation. The coding rate is constantly limited to be not more than (Vob), but a region having a high code amount is sometimes permitted at a timing which is not less than a preset interval.

As described above, in the present invention, it is possible to provide the coded information recording method, recording apparatus, information reproducing method, and reproducing apparatus including a processing method of coding the information of the video, sound, and character at the variable transfer rate to largely increase the user data rate (Vo) while the data read rate (Vr) from the recording medium is limited. Several characteristic contents of the variable transfer rate coding method of the data of the image, sound, and the like will hereinafter be described.

(1) There is provided a system in which the information of the video, sound, and character is coded at the variable transfer rate, video program constituted of connection of the data units constituted as the object units is recorded in the recording medium, the data is read from the medium recording the data by the reproducing operation, and the data is sent to a decode processing section to demodulate an image signal and sound signal. Examples of the variable transfer rate (Vo) for a sub-picture signal or control signal data added to image/sound coding data include: the average rate (Voa) for each specific interval; and the peak rate (Vop). The average rate (Voas) set for each specific interval is allowed to be smaller than the reproducing rate (Vr) of the recording medium, and the peak rate (Vop) is allowed to be larger than the reproducing rate (Vr). Therefore, at the time of the recording or reproducing, the value (Vo) larger than the reproducing rate (Vr) is sometimes present in transfer data.

<Effect of (1)>

In the coding system of a dynamic image signal, represented by MPEG2, a coding transfer rate is set in accordance with the portion difficult to be coded. Then, a greater part has an excess quality. To solve the problem, a variable transfer rate system in which the coding transfer rate is variable with an image quality content has been employed in package media such as DVD. Since the data reproducing rate from the disk is substantially constant in the reproducing process for this case, a process of adjusting the user data rate to the data reproducing rate via the buffer memory has been carried out. Therefore, a redundant reproducing rate has heretofore been required for replenishing the memory, and therefore the peak value of the variable transfer rate (Vo) has been limited so as to indicate "reproducing rate (Vr) > user data variable transfer rate (Vo)". However, in the present invention, even when the user data rate (Vo) in the specific interval has a relation of "Vr > Vo", the peak rate (Vop) is allowed to indicate "Vr < Vop". Accordingly, the image having a momentarily large code amount can be handled without degrading the quality, and large image quality enhancement can be anticipated.

(2) The recording medium corresponds to media exclusively for reproduction.

<Effect of (2)>

The examples of the media such as DVD include media exclusively for reproduction (-ROM), recordable (-R) media which are recording media incapable of being rewritten, and rewritable media (-RW&-RAM). Exclusively for the reproduction, characteristics such as a physical shape are determined so as to easily obtain mass productivity of the media in which the same data is recorded so that the data can be distributed in large amounts. Therefore, when eccentricity is large, it is difficult to increase the reproducing rate that can be assured by the recording/reproducing media. Consequently, for a system in which the code amount can be increased in a partial region, success can be anticipated in promoting the image quality enhancement.

(3) In the video program in which the information of the video, sound, and character is coded at the variable transfer rate and which is constituted by connecting the object units to one another, a multi-scene program is recorded in which a plurality of optionally selectable branch scenes exist between a branch point branched from a trunk scene of a front part and a connection point for connection'to a trunk scene of a rear part. In a recorded state between the branch point and the connection point, the plurality of branch scenes are each divided into a plurality of cells constituted of a plurality of object units, and the cells of the respective branch scenes are recorded in the time-division multiplex. The present invention is applied to this recording medium.

In the coding process, the following setting is performed. That is, the examples of the variable transfer rate (Vo) determined by the coding amount of the information of the video, sound, and character include: the average rate (Voa) for each specific interval; and the peak rate (Vop). The average rate (Voas) for each specific interval time is set to be smaller than the reproducing rate (Vr) of the recording medium after recorded, and the peak rate (Vop) is allowed to be larger than the reproducing rate (Vr).

<Effect of (3)>

In the reproducing operation of the medium in which the multi-scene program is recorded, since the cells constituting the plurality of branch scenes are arranged in the time-division multiplex method, the data stored in the buffer memory is used in a seek time required for reproducing the cell to be next connected from the cell of a designated branch scene in order to assure the seamless reproduction. Therefore, since the user peak rate higher than the reproducing rate (Vr) existing in each cell exists, the data storage into the memory has to be compensated in a portion other than the peak rate region. When the cell reproducing time is not less than the interval time that determines the average rate, (Vr) -(Voa) is usable in the storage into the buffer memory in each cell, and the seamless reproduction is assured.

(4) The average rate (Voa) limited for each designated interval time in the above (1) to (3) is in a range of -5% to -15% of the data reproducing rate (Vr) from the recording medium.

<Effect of (4) >

The reproducing rate is determined by a capability of the read device, but the average rate (Voa) limited for each interval time that determines the image quality may preferably be high. However, the stored data to be consumed in a rotation wait time in the track jump process is stored by a surplus data rate of (Vr-Vo). Here, the consumption data rate which is lower than the storage data rate by about 10% has a good balance. The rate may be in a range of 5% to 15%.

(5) In the video program in which the information of the video, sound, and character is coded at the variable transfer rate and which is constituted by connecting the object units to one another, the multi-scene program in which the plurality of optionally selectable branch scenes exist between the branch point branched from the trunk scene of the previous part and the connection point for connection to the trunk scene of the rear part is recorded in the recording medium. In the recorded state between the branch point and the connection point, the plurality of branch scenes are each divided into the plurality of cells constituted of the plurality of object units, and the cells of the respective branch scenes are recorded in the time-division multiplex. For the variable transfer rate (Vo) determined by the coding amount of the information of the video, sound, and character, with respect to the reproducing rate (Vr) of the recording medium after the data is recorded, the average rate (Voa) for each cell is set to be smaller than the reproducing rate (Vr), and the peak rate (Vop) is allowed to be larger than the reproducing rate (Vr).

<Effect of (5)>

This is a system in which the coding rate in recording the multi-scene program of the multi-story or the multi-angle is allowed to be higher than the reproducing rate from the recording medium. The cells of the respective branch scenes are time-division multiplexed, and recorded, but the average rate for each time interval is limited in the continuous region, and the average rate can be limited by each cell unit in the multi-scene region. Then in the multi-scene region, it is also possible to constitute a cell having an interval time which is not more than that for use in a continuous scene recording region.

(6) Moreover, in the present invention, for the variable transfer rate (Vo) determined by the coding amount of the information of the video, sound, and character, with respect to the reproducing rate (Vr) of the recording medium after the data is recorded, the average rate (Voa) is set to be smaller than the reproducing rate (Vr) for each interval time in the region where the continuous scene is recorded. The average rate (Voa) for each cell is set to be smaller than the reproducing rate (Vr) in the region where the multi-scene program is recorded, and the peak rate (Vop) is allowed to be larger than the reproducing rate (Vr).

<Effect of (6)>

The average rate is limited for each interval time in the region where the continuous scene program is recorded, and the average rate is limited by the unit of the cell to be recorded in the time-division multiplex in the multi-scene program. Accordingly, the limitations of the average rate (Voa) and peak rate (Vop) in the user data rate in the multi-scene program can be processed by the time-division multiplex unit regardless of the previous/subsequent data connected to the data, and authoring is facilitated.

(7) Furthermore, in the present invention, for the variable transfer rate (Vo) determined by the coding amount of the information of the video, sound, and character, with respect to the reproducing rate (Vr) of the recording medium after the data is recorded, the average rate (Voa) is set to be smaller than the reproducing rate (Vr) for each specific interval time (Ti), and the peak rate (Vop) is allowed to be larger than the reproducing rate (Vr). In this coding process, assuming that an actual reproducing time for reproducing video from a video non-reproduced portion of the reproducing cell read from the pickup of the reproducing device in a reproducing circuit is Tp, and a read time until the cell next to the reproduced cell is searched and read by the pickup is Ts, in order to satisfy a relation condition of $Tp+(Vop-Vr) \div Voa > Ts$, the plurality of cells are divided, time-division multiplexed, and arranged.

<Effect of (7)>

When the respective time-division multiplexed units are searched to continuously perform the reproducing process of the data unit, a lack of data amount has to exist at the time of search start even with the data amount in the search of the next cell from the certain cell and the read data amount to be reproduced at the peak rate after the search. Therefore, the code amount of the cell which satisfies the relation is required.

(8) The video program in which the information of the video, sound, and character is coded at the variable transfer rate and which is constituted by connecting the data units constituted as the object units to one another is recorded in the recording medium. The data is read from the recording medium in which the data is recorded by the reproducing operation, sent to the decoding processing section, and demodulated into an original image signal or sound signal. In this system, for the variable transfer rate (Vo) of the sub-picture signal or the control signal data added to the image/sound coding data, with respect to the reproducing rate (Vr) of the recording medium, the average rate (Voa) for each specific interval time is set to be smaller than the reproducing rate (Vr), but the peak rate (Vop) is allowed to be larger than the reproducing rate (Vr).

(9) Moreover, in the present invention, for the variable transfer rate (Vo) of the sub-picture signal or the control signal data added to the image/sound coding data, with respect to the reproducing rate (Vr) of the recording medium, the average rate (Voa) for each specific interval is set to be smaller than the reproducing rate (Vr), but the peak rate (Vop) is allowed to be larger than the reproducing rate (Vr).

(10) Furthermore, in the present invention, there is provided the reproducing device to play back the recording medium in which a coding signal is recorded. For the variable transfer rate (Vo) determined by the coding amount of the information of the video, sound, and character, with respect to the reproducing rate (Vr) of the recording medium after the data is recorded, the average rate (Voa) for each specific interval time (Ti) is set to be smaller than the reproducing rate (Vr), and the peak rate (Vop) is allowed to be larger than the reproducing rate (Vr). Here, assuming that a time for searching the next continuous data cell from the cell of the time-division multiplex unit is Ts, a data buffer memory which satisfies a relation of $(Voa \times Ts)+(Vop-Vr) \times Ti < Bm$ is used.

<Effect of (10)>

For the buffer memory, when the average rate is limited for each specific interval time, it may be considered that the data is processed at the average rate from the relation of the input/output amount in the buffer memory even in the peak rate region having a rate higher than the reproducing rate. A problem is that a shortage of the data with respect to the read rate of the portion needs to'be stored before the search with the data arrangement relation such that the reproducing process is carried out at the peak rate after the search into the next cell. Therefore, when the buffer memory capacity is not less than an added value of these values, the seamless reproduction is possible.

(11) There is provided a system in which the information of the video, sound, and character is coded at the variable transfer rate, the video program constituted by the connection of the data units constituted as the object units is recorded in the recording medium, and the data is read from the medium recording the data by the reproducing operation, and sent to the decoding processing section to demodulate the original image signal or sound signal. In the system, a variable transfer rate coding method is used in which for the variable transfer rate (Vo) of the sub-picture signal or the control signal data added to the image/sound coding data, the information is coded at a transfer rate (Vob) slightly lower than the reproducing rate (Vr) of the recording medium, and the coding at the peak rate (Vop) larger than the reproducing rate (Vr) is permitted in a timing that is not less than a pre-designated interval. A peak rate retention time is one to two minutes using the information compression unit GOP.

As described above, in the present invention, there can be provided the variable transfer rate coding processing method in which the user data rate (Vo) can largely be increased while the data read rate (Vr) from the recording medium is limited. The present invention is effective for the coded information processing method, recording apparatus, reproducing apparatus, recording method, reproducing method, and information recording medium. The present invention is also effective in increasing the user data rate in the multi-scene region in accordance with the increase of the user data rate (Vo) in the usual continuous data recording.

**Claims**

1. An information recording medium in which recording information including video information is coded at a variable transfer rate and is recorded as coded information, wherein the coded information is read and decoded in accordance with a decoding process to decode the video information, a variable transfer rate (Vo) of the coded information is set with respect to a reproducing rate (Vr), in such a manner that an average rate (Voa) of the variable transfer rate (Vo) for each specific interval is smaller than the reproducing rate (Vr), and a value of the variable transfer rate (Vo) larger than that of the reproducing rate (Vr) is permitted for a peak rate (Vop).

2. The information recording medium according to claim 1, **characterized in that** the recording medium comprises media exclusively for reproduction.

3. The information recording medium according to claim 1, **characterized in that** the average rate (Voa) is in a range of -5% to -15% of the reproducing rate (Vr).

4. The information recording medium according to claim 1, **characterized in that** the recording information is information such as video, sound, and characters, the recording information is coded at the variable transfer rate and constituted as a plurality of object units, the plurality of object units are connected to one another to constitute/form a video program, the video program includes a multi-scene program portion in which a plurality of optionally selectable branch scenes exist, a recorded state of the multi-scene program portion is such that the plurality of branch scenes are each divided into a plurality of cells constituted of the plurality of object units and the cells of the respective branch scenes are recorded in a time-division multiplexed form, and the time of the specific interval is set to be not more than a reproducing time of each cell.

5. The information recording medium according to claim 1, **characterized in that** the recording information is information such as video, sound, and characters, the recording information is coded at the variable transfer rate and constituted as a plurality of object units, the plurality of object units are connected to one another to constitute/form a video program, the video program includes a multi-scene program portion in which a plurality of optionally selectable branch scenes exist, a recorded state of the multi-scene program portion is such that the plurality of branch scenes are each divided into a plurality of cells constituted of the plurality of object units and the cells of the respective branch scenes are recorded in a time-division multiplexed form, and the average rate (Voa) is set for each cell.

6. An information recording medium in which recording information including video information is coded at a variable transfer rate and is recorded as coded information, wherein the coded information is read and decoded in accordance with a decoding process to decode the video information, a variable transfer rate (Vo) of the coded information is set with respect to a reproducing rate (Vr) in such a manner that an average rate (Voa) of the variable transfer rate (Vo) for each specific interval is smaller than the reproducing rate (Vr), and a value of the variable transfer rate (Vo) larger than that of the reproducing rate (Vr) is permitted for a peak rate (Vop),

the coded information is coded at the variable transfer rate and constituted as a plurality of object units, the plurality of object units are connected to one another to form a video program, the video program includes a multi-scene program portion in which a plurality of optionally selectable branch scenes exist, a recorded state of the multi-scene program portion is such that the plurality of branch scenes are each divided into a plurality of cells constituted of the plurality of object units and the cells of the respective branch scenes are recorded in a time-division multiplexed form, and

assuming that an actual reproducing time is Tp that is a decoding time for decoding video in a read cell, and a read time is Ts that is a searching time for searching a next cell to the read cell by the pickup, in order to satisfy a relation condition of Tp+(Vop-Vr)÷Voa > Ts, the plurality of cells are divided, time-division multiplexed, and arranged.

7.  An information processing apparatus in which information such as video, sound, and characters is constituted as a plurality of object units coded at a variable transfer rate, the plurality of object units are connected to one another to constitute/form a video program, the video program is recorded in a recording medium, and data is read from the recording medium and sent to a decoding processing section to demodulate original video or sound information, the apparatus comprising:

means for setting an average rate (Voa) for each specific interval to be smaller than a reproducing rate (Vr) of the recording medium with respect to the variable transfer rate (Vo) and for permitting a value larger than that of the reproducing rate (Vr) for a peak rate (Vop).

8.  An information reproducing apparatus to reproduce recording information of an information recording medium in which information such as video, sound, and characters is coded at a variable transfer rate to constitute a plurality of objects, the plurality of object units are connected to one another to constitute a video program, the video program includes a multi-scene program portion including presence of a plurality of optionally selectable branch scenes, and the multi-scene program portion is recorded in such a state that the plurality of branch scenes are divided into a plurality of cells constituted of a plurality of object units and the cells of the respective branch scenes are recorded in a time-division multiplexed form,

**characterized in that** in the recording medium, a variable transfer rate (Vo) determined by a coding amount of the information of the video, sound, and character s is recorded as a coded signal with respect to a reproducing rate (Vr) of the recording medium in such a manner that an average rate (Voa) for each specific interval time (Ti) is smaller than the reproducing rate (Vr) of the recording medium after the recording, and a value larger than that of the reproducing rate (Vr) is permitted for a peak rate (Vop), and

assuming that a time to search the next continuous data cell from the cell of a time-division multiplex unit is Ts, a data buffer memory which satisfies a relation of (Voa×Ts)+(Vop-Vr)×Ti < Bm, and data control means are used.

9.  An information processing method in which information such as video, sound, and characters is coded at a variable transfer rate and constituted as a plurality of object units, a video program constituted by connection of the plurality of object units is recorded in a recording medium, and the video program is read from the recording medium and sent to a decoding processing section to demodulate original video and sound information, the method comprising:

coding the information at a transfer rate (Vob) which is lower than a reproducing rate (Vr) of the recording medium with respect to the variable transfer rate (Vo); and coding the information at a peak rate (Vop) which is larger than the reproducing rate (Vr) in a timing which is not less than a pre-designated interval.

Image data → [Dynamic compensation prediction processing section] 11 → [DCT section] 12 → [Quantization processing section] 13 → [variable length coding processing section] 14 → Code

[Code length allocation control section] 15

F I G. 1

Mbps

Bit rate (fixed)

F I G. 2A    Time [sec]

Mbps

Bit rate (variable)

F I G. 2B    Time [sec]

FIG. 3

EP 1 465 183 A2

Volume space

| Volume and file constitution | DVD video zone | DVD another zone |
|---|---|---|

| VMG | VTS#1 | VTS#2 | VTS#n | (1≦n≦99) |
|---|---|---|---|---|

| File ··· | File ··· | File ··· | File ··· |
|---|---|---|---|
| 2 or 3 | 3~12 | 3~12 | 3~12 |

(Number of files)

FIG. 4

Video manager (VMG) and video title set (VTS)

| VMG | VTS#1 | VTS#2 | VTS#n | (n≦99) |
|---|---|---|---|---|

| Control data (VMGI) | VOBS for menu (VMGM_VOBS) | For backup (VMGI) |
|---|---|---|
| ←1 file→ | ←1 file→ | ←1 file→ |

| Control data (VTSI) | VOBS for menu (VTSM_VOBS) | VOBS for title (VTSTT_VOBS) | For backup (VTSI) |
|---|---|---|---|
| ←1 file→ | ←1 file→ | ←1~9 file→ | ←1 file→ |

Cell ID | C_IDN #1 | C_IDN #2 | C_IDN #3 | C_IDN #1 | C_IDN #2 | C_IDN #1 | C_IDN #i |

VOB ID | ←——VOB_IDN #1——→ | ←VOB_IDN #2→ | ←——VOB_IDN #i——→ |

FIG. 5

Video object set (VOBS) and cell (Cell)

| Video object (VOBS) | | | |
|---|---|---|---|
| | | | |
| Video object (VOB_IDN1) | Video object (VOB_IDN2) | | Video object (VOB_IDNi) |
| | | | |
| Cell (C_IDN1) | Cell (C_IDN2) | | Cell (C_IDNi) |
| | | | |
| Video object unit (VOBU) | Video object unit (VOBU) | | Video object unit (VOBU) |

| NV_PCK | A_PCK | V_PCK | V_PCK | V_PCK | SP_PCK | A_PCK | V_ | | A_PCK | SP_PCK | V_PCK | V_PCK | V_PCK | NV_PCK | V_PCK | | A_PCK |
|---|---|---|---|---|---|---|---|---|---|---|---|---|---|---|---|---|---|

FIG. 6

FIG. 7

EP 1 465 183 A2

Video packs in video object unit (VOBU)

| | | | | | |
|---|---|---|---|---|---|
| Sequence header | I picture | | | B picture | B picture |

| | | | | | | | |
|---|---|---|---|---|---|---|---|
| Video pack i | Video pack i+1 | Video pack i+2 | Video pack i+3 | | Video pack j-2 | Video pack j-1 | Video pack j |

2048 bytes    2048 bytes    2048 bytes    2048 bytes

## F I G. 8

Flow of data of multi-scene

— (1,1) — • — (1,2) — • — ⋯ — • — (1,n) —

— (2,1) — • — (2,2) — • ⋯⋯⋯⋯ • — (2,n) —

Po-a

— (m,1) — • — (m,2) — • — ⋯ — • — (m,n) —

Po-b

## F I G. 9

Arrangement example of interleaved block

| (1,1) | (2,1) | | (i,1) | | (m,1) | (1,2) | (2,2) | | (i,2) | | (m,2) | | (i,j) |

1LVU

| ⋯⋯ | (m,n-1) | (1,n) | (2,n) | | (i,n) | | (m,n) | ⋯⋯ |

Interleaved block

## F I G. 10

Data buffer in reproducing process of recording medium

Bm : buffer size
Tk : kickback time
Te : ECC read time

F I G. 11

Data buffer in multi-scene process

F I G. 12

User rate in multi-scene process

F I G. 13

EP 1 465 183 A2

\* Interval average rate is not exceeded in any period

FIG. 14

FIG. 15

Bm : buffer size
Tk : kickback time
Te : ECC read time

FIG. 17

F I G. 16

EP 1 465 183 A2

EP 1 465 183 A2

F I G. 18

F I G. 19

F I G. 20

23